# EUROPÄISCHE PATENTSCHRIFT

(11) **EP 0 867 635 B1**
(45) Veröffentlichungstag und Bekanntmachung des Hinweises auf die Patenterteilung: **13.03.2002**
(21) Anmeldenummer: 96118238.3
(22) Anmeldetag: 14.11.1996
(51) Int. Cl.: F16F 15/16, F16F 15/12

(54) **Hydraulischer Torsionsschwingungsdämpfer mit einem Planetensystem**
Hydraulic torsional damper with a planetary system
Amortisseur hydraulique de torsion avec un système planétoide

(43) Veröffentlichungstag der Anmeldung: 30.09.1998
(73) Patentinhaber: Patentverwertungsgesellschaft Rohs Voigt mbH, 52351 Düren (DE)
(72) Erfinder: Rohs, Ulrich, Dr.-Ing., 52351 Düren (DE)
(74) Vertreter: Castell, Klaus, Dr.-Ing.

(56) Entgegenhaltungen:
- EP-A- 0 400 508
- DE-A- 3 712 876
- DE-A- 3 943 520
- DE-A- 4 111 962
- US-A- 4 800 996

## Beschreibung

Die Erfindung betrifft einen hydraulischen Torsionsschwingungsdämpfer nach dem Oberbegriff des Patentanspruches 1.

Ein solcher Torsionsschwingungsdämpfer ist beispielsweise in der DE 43 18 165 C1 beschrieben. Bei solchen und ähnlichen Torsionsschwingungsdämpfern kann durch Verformung der drehenden Teile an den inneren Dichtungen eine unerwünschte Leckage auftreten. Dies zu vermeiden und den Wirkungsgrad des Schwingungsdämpfers zu erhöhen ist Aufgabe der Erfindung.

Die Lösung der gestellten Aufgabe ergibt sich aus den kennzeichnenden Merkmalen des Patentanspruches 1. In den Unteransprüchen sind weitere Ausgestaltungen der Erfindung angegeben.

Nachstehend ist die Erfindung anhand von in der Zeichnung dargestellten Ausführungsbeispielen näher erläutert. Es zeigen:
- Fig.1: einen teilweisen Längsschnitt durch einen Torsionsschwingungsdämpfer nach der Erfindung nach der Linie I-I in Fig.3,
- Fig.2: einen teilweisen Längsschnitt durch den Torsionsschwingungsdämpfer der Fig. 1 nach der Linie II-II in Fig.3,
- Fig.3: einen teilweisen Querschnitt durch den erfindungsgemäßen Torsionsschwingungsdämpfer im Ruhezustand,
- Fig.4: einen teilweisen Querschnitt durch den Torsionsschwingungsdämpfer bei hoher Drehzahl,
- Fig.5: ein Steuerventil aus Fig.3 in vergrößertem Maßstab und
- Fig.6: eine schematische Ansicht eines anderen Steuerventils.

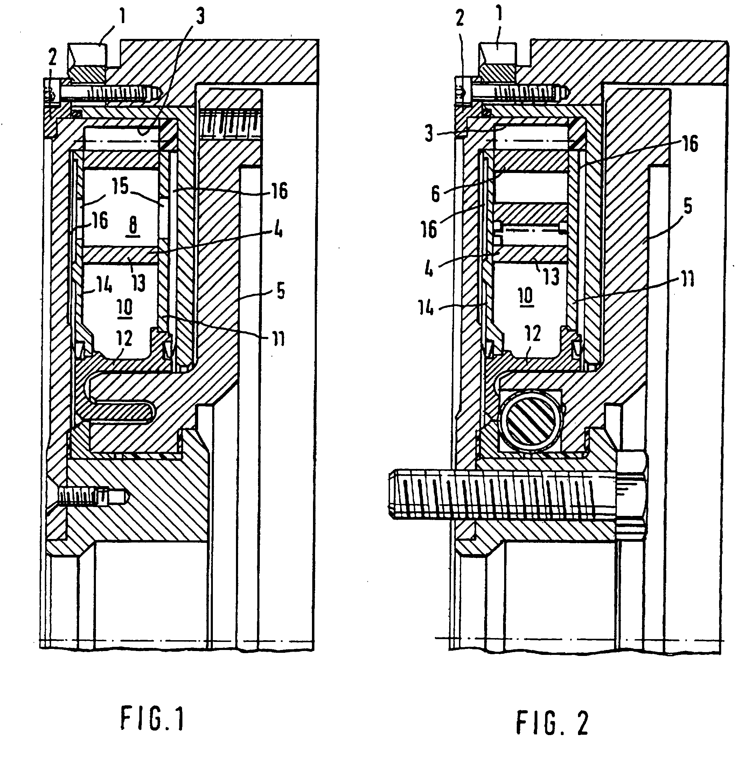

Der in den Fig. 1-4 dargestellte Torsionsschwingungsdämpfer besteht im wesentlichen aus einem, einen Antriebszahnkranz 1 tragenden Primärteil 2 mit einer Innenverzahnung 3 und einem, einen Planetenträger 4 tragenden Sekundärteil 5. In dem Planetenträger 4 ist eine Anzahl Planetenzahnräder 6 gelagert. Im Ausführungsbeispiel sind sie ohne Achsen in entsprechenden teilzylindrischen Ausnehmungen 7 aufgenommen.

Die Planetenzahnräder 6 stehen mit der Innenverzahnung 3 in Eingriff und bilden.mit dieser eine Anzahl Zahnradpumpen. Zwischen den Planetenzahnrädern 6 ist im Planetenträger 4 jeweils eine Ansaugkammer 8 vorgesehen, die über ein Steuerventil 9 mit einer ringförmigen, im Planetenträger untergebrachten Druckkammer 10 für ein hydraulisches Medium verbunden ist. Diese Druckkammer 10 ist am radial inneren Ende des Planetenträgers 4 angeordnet.

Wie die Fig. 1 und 2 zeigen, ist die Druckkammer 10 von der Rückwand 11 und der Nabe 12 sowie von der radial außen liegenden Begrenzungswand 13 des Planetenträgers 4 umschlossen, in der die Planetenzahnräder 6 gelagert sind. Um die Druckkammer 10 völlig dicht abzuschließen, weist sie eine darauf dicht anliegende und befestigte Stirn wand 14 auf, die im Bereich der Ansaugkammern 8 Öffnungen 15 aufweist. Auf diese Weise wird der Bereich in den Spalträumen 16 axial vor und hinter dem Druckraum 10 in den Bereich der Ansaugkammern 8 einbezogen und bildet mit diesen den Ansaugteil.

Die Planetenzahnräder sind mit den Ansaugkammern 8 über Ansaugkanäle 17 und mit der Druckkammer 10 über dort mündende Druckkanäle 18 verbunden.

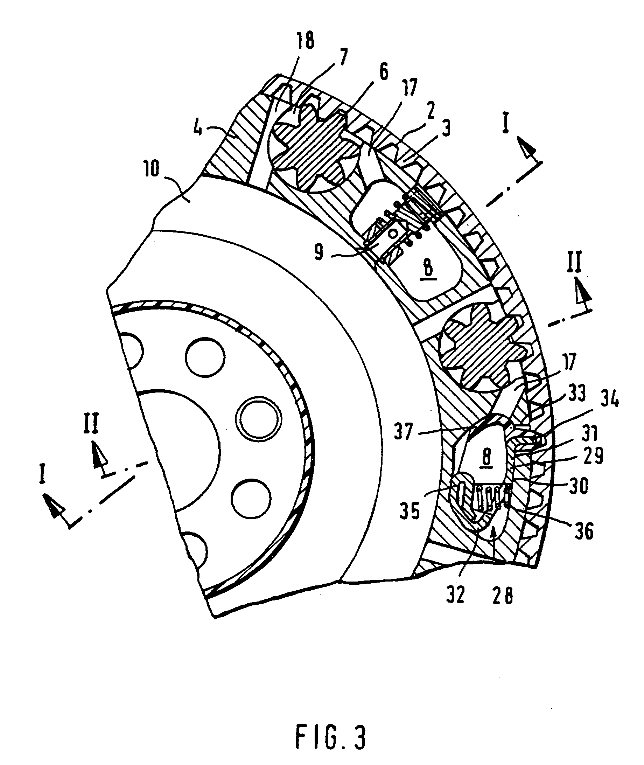

In den Ansaugkammern 8 befindet sich jeweils ein mit der Druckkammer 10 verbundenes Steuerventil 9. Dieses besteht, wie die Fig.3-5 zeigen, aus einem radialen, nach außen geschlossenen Rohr 19, das unmittelbar mit der Druckkammer 10 verbunden ist und an seinem radial äußeren Ende einen Flansch 20 aufweist. Dieser dient als Sitz für eine Rückstellfeder 21, die eine auf dem Rohr 19 geführte Zylindermuffe 22 radial nach innen drückt. Etwas radial außerhalb des oberen Muffenrandes in der in Fig.3 gezeigten Ruhestellung befindet sich im Rohr 19 mindestens eine Auslaßöffnung 23, die die Ansaugkammer 8 mit der Druckkamer 10 verbindet.

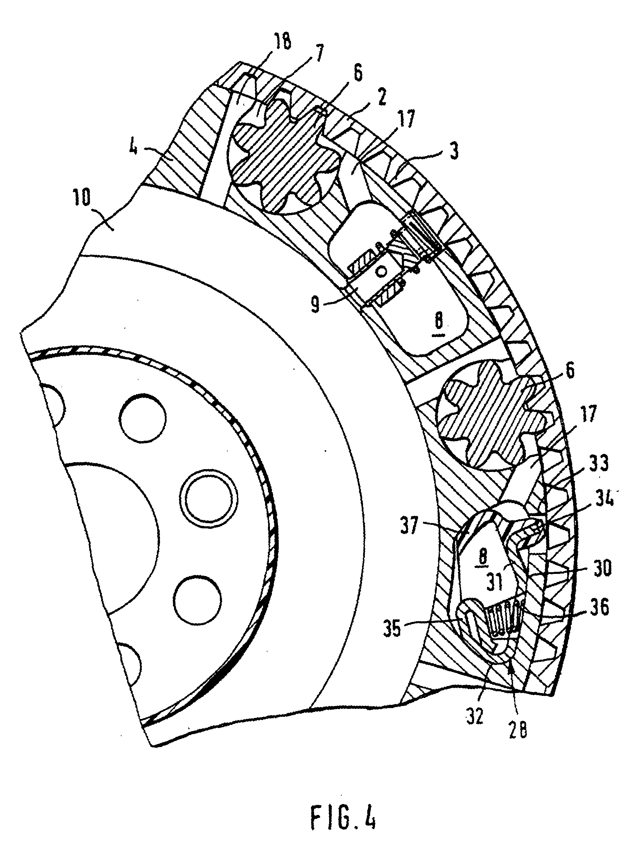

Bei höherer Drehzahl, bei der ein geringerer Dämpfungsbedarf vorliegt, treibt die Zentrifugalkraft die Zylindermuffe 22 über das Rohr 19 radial nach außen. Dabei wird die Auslaßöffnung 23 verschlossen, so daß kein weiteres zusätzliches Dämpfungsmittel aus der Druckkammer 10 in die Ansaugkammer 8 gelangt. Fig.4 zeigt das Steuerventil in der Stellung bei höherer Drehzahl, in der die Zylindermuffe 22 die Auslaßöffnung 23 verdeckt.

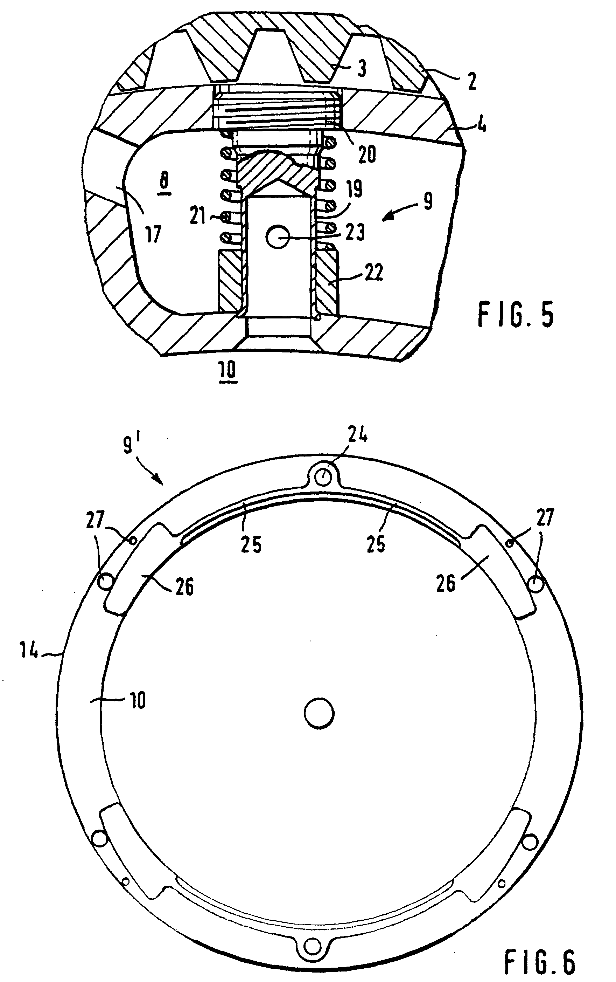

Eine Alternative zu diesem Steuerventil 9 zeigt schematisch Fig.6.

Eine Seitenwand 14 der Druckkammer 10 weist mindestens eine Lagerung 24 für ein z.B. aus Blech gefertigtes Steuerventil 9' auf, das einen doppelarmigen Hebel bildet, dessen, einen Teil eines Kreisbogens bildende Hebelarme 25 an ihren Enden jeweils eine Verschlußscheibe 26 tragen, die dicht auf der Seitenwand 14 aufliegt. Radial außerhalb der Verschlußscheiben 26 (in deren Ruhestellung) ist in der Seitenwand 14 der Druckkammer 10 mindestens eine Auslaßöffnung 27 zum Spaltraum 16, und damit zum Ansaugteil vorgesehen.

Bei hohen Drehzahlen bewegen sich die Verschlußscheiben 26 infolge der Zentrifugalkraft nach außen und verschließen dabei die Auslaßöffnungen.

Beide Steuerelemente 9,9' dienen der Aufgabe, bei kleiner Drehzahl, wo ein hoher Dämpfungsbedarf besteht, möglichst viel Durchflußmenge an Dämpfungsmittel bereitzustellen und bei höherer Drehzahl, wo ein geringerer Dämpfungsbedarf vorliegt, die Durchflußmenge zugunsten eines besseren Wirkungsgrades zu vermindern.

Die Fig.3 und 4 zeigen ferner eine Kriechsperre 28. Diese soll eine Relativbewegung zwischen dem Primärteil 2 und dem Planetenträger 4 im Ruhezustand vermeiden. Die Kriechsperre 28 ist in einer Ansaugkammer 8 im Planetenträger 4 angeordnet und besteht im wesentlichen aus einem gebogenen Blattfederkörper 29, der durch einen Knick 30 einen doppelarmigen Hebel mit den Hebelarmen 31 und 32 bildet. Der linke Hebelarm 31 liegt formschlüssig an der dem Ansaugkanal 17 zugewandten Wandteil der Ansaugkammer 8 an und trägt einen radial nach außen durch eine öffnung 33 in der Ansaugkammer ragenden Sperrzahn 34, der im Ruhezustand (Fig.3) in eine Zahnlücke der Innenverzahnung 3 eingreift. Der andere Hebelarm 32 liegt infolge des Knickes 30 an dem radial inneren Ende der Ansaugkammer 8 an und ist dort eingerollt, um eine genügende Masse 35 zu bilden. Diese Masse stützt sich an einer Rückstellfeder 36 ab, die sich ihrerseits radial nach außen an der Wandung der Ansaugkammer 8 abstützt.

Wird der Motor angelassen, so dreht sich zunächst der Planetenträger 4 mit dem Primärteil 2 bis die Zentrifugalkraft der Masse 35 die Kraft der Rückstellfeder 36 überwindet und den Blattfederkörper am Knick 30 umschwenkt, wobei der Sperrzahn 33 außer Eingriff gelangt. (Fig.4)

Vorteilhaft weist der Sperrzahn 34 eine Kunststoffumhüllung 37 auf, die auch das vom Sperrzahn 34 abgewandte Ende des Hebelarmes 31 bilden kann.

## Patentansprüche

1. Hydraulischer Torsionsschwingungsdämpfer mit einem einen Antriebszahnkranz tragenden Primärteil mit Innenverzahnung und einem, einen Planetenträger. tragenden Sekundärteil, wobei die im Planetenträger angeordneten Planetenzahnräder mit der Innenverzahnung des Primärteiles in Eingriff stehen und Zahnradpumpen bilden, die ein hydraulisches Medium fördern, wobei zwischen der Nabe des Planetenträgers und den Planetenzahnrädern eine ringförmige Druckkammer gebildet ist,
**dadurch gekennzeichnet, daß** der Planetenträger (4) seitliche Stirnwände (14,11) aufweist, die die Druckkammer (10) abschließen, wobei diese mit den Druckseiten der Planetenzahnräder (6) in Verbindung steht und regelbare Auslaßöffnungen (23,27) zu Ansaugkammern (8) aufweist.

2. Hydraulischer Torsionsschwingungsdämpfer nach Anspruch 1, **dadurch gekennzeichnet, daß** in zwischen den Planetenzahnrädern (6) im Planetenträger (4) gebildeten Ansaugkammern (8) jeweils ein mit der Druckkammer (10) verbundenes, radiales und außen geschlossenes Rohr (19) mit einer in die Ansaugkammer (8) mündenden Auslaßöffnung angeordnet ist, auf dem eine radial nach außen gegen eine Rückstellfeder (21) bewegbare Zylindermuffe (22) geführt ist, die bei höherer Drehzahl die Auslaßöffnung (23) zu verschließen vermag.

3. Hydraulischer Torsionsschwingungsdämpfer nach Anspruch 1, **dadurch gekennzeichnet, daß** in der Druckkammer (10) an mindestens einer Stirnwand (14) mindestens ein doppelarmiger, elastischer Hebel (25) gelagert ist, der sich entlang einer Umfangslinie erstreckt und dessen Enden flach an der Stirnwand (14) anliegende Verschlußscheiben (26) tragen, die bei erhöhter Drehzahl an der Stirnwand (14) vorgesehene Verbindungsöffnungen (27) zum außerhalb der Druckkammer befindlichen Ansaugteil zu schließen vermögen.

4. Hydraulischer Torsionsschwingungsdämpfer nach einem der Ansprüche 1 bis 3, **dadurch gekennzeichnet, daß** in mindestens einer Ansaugkammer (8) eine Kriechsperre (28) vorgesehen ist, die aus einem gebogenen, durch einen Knick (30) einen doppelarmigen Hebel (31,32) bildenden Blattfederkörper (29) besteht, dessen einer Hebelarm (31) an der äußeren Wandung der Ansaugkammer (8) anliegt und einen durch eine Öffnung (33) der Wandung ragenden, in die Innenverzahnung (3) des Primärteiles (2) eingreifenden Sperrzahn (34) trägt und dessen anderer Hebelarm (32) an seinem Ende eine Masse (35) aufweist, die gegen eine radiale, an der äußeren Wandung der Ansaugkammer (8) abgestützte Rückstellfeder (36) wirkt.

5. Hydraulischer Torsionsschwingungsdämpfer nach Anspruch 4, **dadurch gekennzeichnet, daß** das Ende des den Sperrzahn (34) tragenden Hebelarmes (31) des Blattfederkörpers (29) eine Kunststoffummantelung trägt, die auch das Ende des Hebelarmes (31) bilden kann.

## Claims

1. A hydraulic torsional vibration damper with a primary part that is provided with an internal gearing and carries an annular drive gear and with a secondary part that carries a pinion cage, with the planetary gears arranged in the pinion cage meshing with the internal gearing of the primary part and forming gear pumps that convey a hydraulic medium, and with an annular pressure chamber being formed between the hub of the pinion cage and the planetary gears, **characterized by** the fact that the pinion cage (4) contains lateral side walls (14, 11) that close the pressure chamber (10), with said pressure chamber being connected to the pressure sides of the planetary gears (6) and containing controllable outlet openings (23, 27) leading to the suction chambers (8).

2. A hydraulic torsional vibration damper according to claim 1, **characterized by** the fact that one respective tube (19) which is connected to the pressure chamber (10) and closed in the radial direction and on the outside is arranged in the suction chambers (8) formed between the planetary gears (6) in the pinion cage (4), with said tube containing an outlet opening that ends in the suction chamber (8), and with a cylindrical bushing (22) that can be moved radially outward against the force of a pull-back spring (21) and is able to close the outlet opening (23) at higher rotational speeds being guided on the aforementioned tube.

3. A hydraulic torsional vibration damper according to claim 1, **characterized by** the fact that at least one double-armed elastic lever (25) is arranged in the pressure chamber (10) on at least one end wall (14), with said lever extending along a circumferential line, and with the ends of said lever carrying sealing disks (26) that tightly adjoin the end wall (14) and are able to close openings (27) which are arranged on the end wall (14) and lead to the suction part situated outside of the pressure chamber at higher rotational speeds.

4. A hydraulic torsional vibration damper according to one of claims 1-3, **characterized by** the fact that a creep lock (28) is provided in at least one suction chamber (8), with said creep lock consisting of a leaf spring member (29) that contains a bend (30) and thusly forms a double-armed lever (31, 32), with one lever arm (31) of said leaf spring member adjoining the outer wall of the suction chamber (8) and carrying a ratchet (34) that protrudes through an opening (33) in the wall and engages into the internal gearing (3) of the primary part (2), and with the other lever arm (32) of the leaf spring member containing a mass (35) on its end which acts against a radial pull-back spring (36) that is supported on the outer wall of the suction chamber (8).

5. A hydraulic torsional vibration damper according to claim 4, **characterized by** the fact that the end of the lever arm (31) of the leaf spring member (29) which carries the ratchet (34) is provided with a plastic covering that may also form the end of the lever arm (31).

## Revendications

1. Amortisseur hydraulique de torsion avec une pièce primaire portant une couronne dentée d'entraînement avec engrenage intérieur et une pièce secondaire portant un support planétoïde, les roues dentées planétoïdes placées dans le support planétoïde étant en prise avec l'engrenage intérieur de la pièce primaire et formant des pompes à roues dentées, qui transportent une substance hydraulique, une chambre de compression circulaire étant formée entre le moyeu du support planétoïde et les roues dentées planétoïdes,
**caractérisé en ce que** le support planétoïde (4) présente des parois latérales (14, 11) qui délimitent la chambre de compression (10), celle-ci étant en liaison avec les côtés de compression des roues dentées planétoïdes (6) et présentant des ouvertures de sortie (23, 27) réglables vers les chambres d'aspiration (8).

2. Amortisseur hydraulique de torsion selon la revendication 1, **caractérisé en ce que**, dans les chambres d'aspiration formées entre les roues dentées planétoïdes (6) dans le support planétoïde (4) se trouve un tuyau (19) radial fermé à l'extérieur respectivement relié à la chambre de compression (10) avec une ouverture de sortie débouchant dans la chambre d'aspiration (8), sur lequel un manchon cylindrique (22) mobile dans le sens radial vers l'extérieur contre un ressort de rappel (21) pouvant fermer, en cas de régime assez élevé, l'ouverture de sortie (23) est guidé.

3. Amortisseur hydraulique de torsion selon la revendication 1, **caractérisé en ce que**, dans la chambre de compression (10), sur au moins une paroi frontale (14), au moins un levier élastique à bras double (25) est installé, s'étendant le long d'une ligne de volume et dont les extrémités portent des rondelles d'obturation (26) placées à plat sur la paroi frontale (14), pouvant, en cas d'augmentation de régime, faire fermer des ouvertures de liaison (27), prévues sur la paroi frontale (14), avec l'élément d'aspiration se trouvant à l'extérieur de la chambre de compression.

4. Amortisseur hydraulique de torsion selon une des revendications 1 à 3, **caractérisé en ce que**, dans au moins une chambre d'aspiration (8) une barrière de fluage (28) est prévue, consistant en corps à ressort à lames (29) replié formant, par un coude (30), un levier à bras double (31, 32), dont un bras de levier (31) est placé sur la paroi extérieure de la chambre d'aspiration (8) et porte une dent d'arrêt (34) dépassant de la paroi par une ouverture (33) qui empiète dans l'engrenage intérieur (3) de la pièce primaire (2) et dont l'autre bras de levier (32) présente à son extrémité une masse (35) qui agit contre un ressort de rappel (36) radial s'appuyant à la paroi extérieure de la chambre d'aspiration (8).

5. Amortisseur hydraulique de torsion selon la revendication 4, **caractérisé en ce que** l'extrémité du bras de levier (31) portant la dent d'arrêt (34) du corps à ressort à lames (29) est recouverte d'un enrobage en plastique qui peut également constituer l'extrémité du bras de levier (31).
